# EUROPEAN PATENT SPECIFICATION

(11) **EP 0 993 211 B1**
(45) Date of publication and mention of the grant of the patent: **12.01.2005**
(21) Application number: 98118816.2
(22) Date of filing: 05.10.1998
(51) Int. Cl.: H04Q 7/38, H04B 7/216, H04L 12/28

(54) **Random access channel partitioning scheme for CDMA system**
Aufteilungsschema für ein Zufallszugriffskanal in einem CDMA System
Technique de partition d'un canal à accès aléatoire pour système à AMRC

(43) Date of publication of application: 12.04.2000
(73) Proprietor: Sony International (Europe) GmbH, 10785 Berlin (DE)
(72) Inventor: Halton, John c/o Sony International (Europe) GmbH, 70736 Fellbach (DE); James, Paul c/o Sony International (Europe) GmbH, 70736 Fellbach (DE)
(74) Representative: Körber, Martin, Dipl.-Phys.

(56) References cited:
- EP-A- 0 621 708
- EP-A- 0 765 096
- WO-A-97/06622
- US-A- 5 123 029

## Description

The present invention relates to a method and to devices for transmitting and receiving data in a code division multiple access telecommunication system.

A telecommunication system is a system, in which data are communicated between one or more base stations and one or more mobile stations. Thereby, the communication area is divided in cells, in which one base station communicates with one or more mobile stations. Multiple access systems are used to support the simultaneous access of a plurality of mobile stations to one base station within the limited resources of the transmission system. Several multiple access systems are known, e. g. frequency division multiple access (FDMA), time division multiple access (TDMA), or code division multiple access (CDMA). Additional to these basic types of multiple access systems, combinations of these different systems are possible and in practical use. The GSM-system for example uses a combination of FDMA and TDMA.

The present invention particularly relates to the transmission and reception of random access data in a code division multiple access system. Random access data are transmitted in the so-called random access slot (RACH) from a mobile station to build up a connection. The random access data from the mobile station contain a request, if the base station has sufficient resources available to build up the required connection or to transfer user data.

The random access slot comprises or consists of succeedingly or periodically provided random access time windows, in which several random access slots are available. The different random access slots are randomly chosen by a mobile station for the transmission of random access data. In a currently proposed wide band direct sequence CDMA (WCDMA) system, the random access time windows are based upon an initial preamble scrambling code, which differentiates between one cell and another cell. Thereby, these codes need to be planned to ensure that neighboring cells do not use the same code. Therefore, within the preamble part of each random access slot burst, is provided the preamble signature, which is one of 16 separate codes available for use within that cell. These 16 codes can be seen as separate slots. One of these codes is chosen randomly by the mobile station for the transmission of random access data. Beforehand, the base station broadcasts, which codes are available in each cell over the broadcast control channel (BCCH). In addition, within one time frame (10ms) are provided 8 time offsets, each of 1,25 ms, allowing a further 8 variations. In other words, in each time frame a random access time window is provided, which comprises a plurality of random access slots for transmitting random access data from one or more mobile stations to the base station. The random access time window thereby extends over the time frame of 10ms, so that 128 different random access slots (16 separate preamble codes and 8 time offsets) are provided within one random access time window.

A collision, i. e. a situation, where messages from two or more mobile stations collide and are lost, only occurs, when both the preamble code and the time offset are chosen in the same random access time window. In practice, it is expected that only about 30% of the theoretical maximum of 128 accesses per 10ms will be possible.

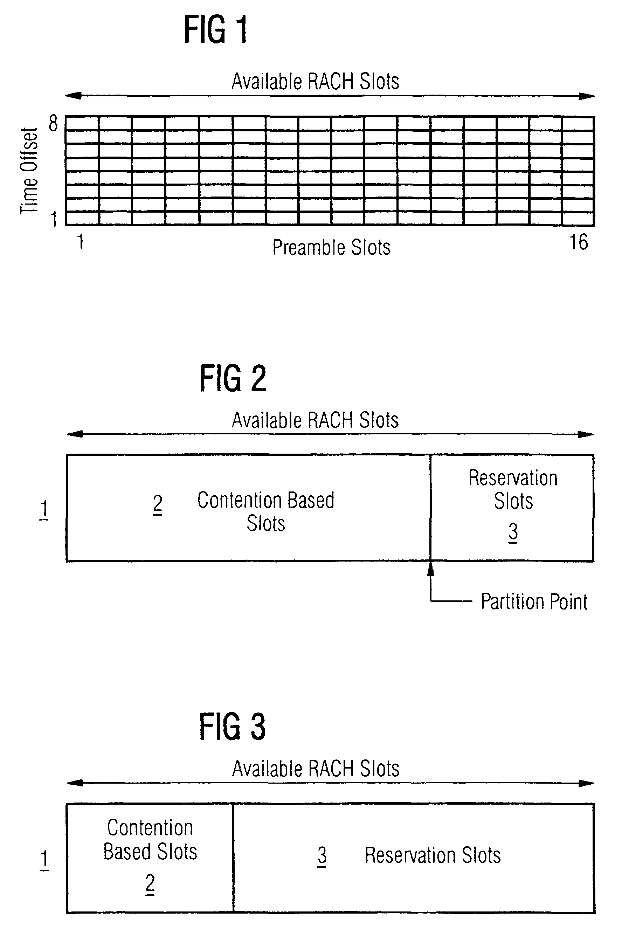

In a situation, where a number of packet data users are operating in a bursty traffic situation, this maximum could be quickly reached. In such a situation the access to the network will either become slower or not be possible at all. This is due to congestion caused by the build up of first time requests and the retransmissions made necessary by previous collisions. Since the access to the random access slots is only contention based as shown in Fig. 1, a guaranteed upper limit on the amount of time needed to access the system even after an initial burst is not ensured. For packet data applications, which demand a constant periodic delivery of data, ready access is critical.

WO 98/24250 discloses a TDMA system, which allocates a fixed random access slot constantly to a particular mobile station.

US-A-5123029 discloses a system and a method for transmitting and receiving data in a multiple access telecommunication system of the type using spread-spectrum modulation techniques, wherein a random access time window (frame) comprising a plurality of random access slots for transmitting random access data from at least one first communication (remote) device to a second communication device is provided, said time window being partitioned in a first and a second section (interval) whereby the first section contains contention based random access slots (for contention access by the remote station) and the second section contains reservation based random access slots (for controlled access by the remote station). The number of contention based random access slots is variable and can be increased/decreased depending on the system load.

The object of the present invention is thus to provide a method and devices for transmitting and receiving data in a code division multiple access telecommunication system, in which a random access time window comprising a plurality of random access slots for transmitting random access data is provided and which enable a reduced congestion on the random access slots and a more efficient use of the random access time window. The importance of an effective random access slot utilization arises particularly from increased load from packet data capacity requests and the transfer of small amounts of user data within random access slot bursts.

This object is achieved by a method for transmitting and receiving data in a code division multiple access telecommunication system according to claim 1, comprising the steps of providing a random access time window comprising a plurality of random access slots for transmitting random access data from at least one first communication device to a second communication device, partitioning the random access time window in a first and a second section, whereby the first section contains contention based random access slots and the second section contains reservation based random access slots, whereby a first communication device for transmitting random access data to said second communication device, randomly chooses one of said random access slots from said first section of said random access time window, and whereby said random access data transmitted in a random access slot of said first section comprise reservation data for reserving at least one random access slot of said second section in at least one succeeding random access time window. The first communication device can thereby be a mobile station and the second communication device can thereby be a base station of the telecommunication system. Reservation based random access slots are slots which cannot be accessed on a contention basis, but only if they had been reserved before.

This object is further achieved by a device for transmitting and receiving data in a code division multiple access telecommunication system according to claim 10, in which a random access time window comprising a plurality of random access slots for transmitting random access data is provided, the random access time window being partitioned in a first and a second section, whereby the first section contains contention based random access slots and the second section contains reservation based random access slots, with means for randomly choosing a random access slot from said first section and means for transmitting random access data in said chosen random access slot, whereby said random access data transmitted in a random access slot of said first section comprise reservation data for reserving at least one random access slot of said second section in at least one succeeding random access time window. This device for transmitting and receiving data is e. g. a mobile station of the telecommunication system.

The above object is further achieved by a device for transmitting and receiving data in a code division multiple access telecommunication system according to claim 16, in which a random access time window comprising a plurality of random access slots for transmitting random access data is provided, with means for partitioning the random access time window in a first and a second section, whereby the first section contains contention based random access slots and the second section contains reservation based random access slots, and means for transmitting partitioning information defining the partitioning of said random access time window, whereby said random access data transmitted in a random access slot of said first section 2 comprise reservation data for reserving at least one random access slot of said second section in at least one succeeding random access time window, said device further comprising means for reserving at least one random access slot of said second section in at least one succeeding random access time window. This device for transmitting and receiving data can be e. g. a base station of the multiple access telecommunication system.

The partitioning of the random access time window into the first section containing contention based random access slots and a section containing reservation based random access slots thereby allows to reduce congestion in the random access slots and to more efficiently utilize the resources of the random access time window. Advantageously, the number of random access slots in the first and the second section, respectively, can be set variably depending on system requirements. This allows to flexibly modify the random access time window from one moment to the next moment to adopt the random access time window to dynamically changing environments and requirements. Each random access slot in said random access time window can be defined by a time offset value and a preamble code. Further advantageously, said second communication device (which e. g. can be a base station) periodically transmits partitioning information defining the partitioning of the random access time window to at least one first communication device, which for example can be a mobile station. Thereby, the partitioning of the random access time window can be flexibly adopted to system requirements.

According to the present invention, said random access data transmitted in a random access slot of said first section comprises reservation data for reserving at least one random access slot of said second section in at least one succeeding random access time window. Thereby, ready access for packet data applications is ensured, which demand a constant delivery of data. In this case, said reservation data can comprise data on the time duration required for the total number of reserved random access slots to indicate the end of the reservation. Thereby, the reservation of random access slots in the second section of succeeding random access time windows ends automatically upon expiring of the pre-set time period. Said reservation data can further comprise information on a number of random access slots to be reserved in the first succeeding random access time window and information on a continuos reduction of said number in the following random access time windows. In this case, the number of reserved random access slots in the second sections of succeeding random access time windows can be decreased gradually until the end of the reservation term.

Said first communication device, which can for example be a mobile station, can transmit reservation termination data in a first or second section of a random access time window for indicating the end of the reservation of the required random access slot. This might be necessary in cases, in which already reserved random access slots in the second sections of succeeding random access time windows are not necessary and have to be released for usage by other users. Alternatively, said second communication device, which can for example be a mobile station, terminates the reservation upon determination of a non-usage of reserved random access slots. The second communication device can thereby automatically terminate the reservation if it is determined, that reserved random access slots are not used. In this case, the second communication device can transmit information on the termination of the reservation to the corresponding first communication device to inform that earlier reserved random access slots in second sections of succeeding random access time windows are not reserved anymore.

The device for transmitting and receiving data according to the present invention, which might be a mobile station and comprises means for randomly choosing a random access slot from said first section and means for transmitting random access data in said chosen random access slot can further comprise means for receiving periodically transmitted partitioning information defining the partitioning of said random access time window.

The device for transmitting and receiving data according to the present invention, which might be a base station, and comprises means for partitioning the random access time window in a first and a second section and means for transmitting partitioning information defining the partitioning of said random access time window, might further comprise means for receiving random access data in one of said random access slots from said first section of said random access time window. Said means for partitioning the random access time window advantageously sets the number of random access slots in said first and second section, respectively, variably depending on system requirements, whereby said means for transmitting partitioning information periodically transmit said partitioning information. Said device for transmitting and receiving data, which might be a base station, can further comprise means for determining a non-usage of reserved random access slots, whereby the reservation is terminated upon a positive result of said determination. Said means for transmitting information can thereby transmit information on the termination of the reservation upon a positive result of said determination.

In the method and devices for transmitting and receiving data according to the present invention, the random access time window is partitioned into a first and a second section, whereby the first section contains contention based random access slots, and the second section contains reservation based random access slots. The reservation based random access slots can be dedicated to a communication device, e. g. a mobile station, for a limited time. A request for guaranteed reservation of reservation based random access slots is made through an initial contention based random access slot. Thereby, the network or the base station may also assign a reserved random access slot. These reserved random access slots are then used for uplink data transfer between a mobile station and a base station or requests for a channel to transmit user data. Since the partitioning of the random access time window can be set variable depending on system requirements, the random access slot resources in the random access time window can be used more efficiently, e. g. by minimizing contention based access, since band-width is not used for retransmissions when bursts collide. Furthermore, a breakdown can be avoided, which can occur, when the number of retries and subsequent retransmissions increase the number of collisions until deadlock occurs. The telecommunication network or the base station can dynamically control the partitioning of the random access resources in the random access time window into contention and reservation based channels. Thus, the exact partition can be tailored to the particular requirements from moment to moment. This partitioning information is broadcasted to the mobile stations upon the broadcast control channel (BCCH). The present invention thereby particularly enables a faster access to the communication network particular in cases where a number of packet data users are operating in bursty traffic situations. Further, congestion caused by the build up of first time requests and retransmissions made necessary by previous collisions can be avoided.

In the following, preferred embodiments of the present invention are explained in detail referring to the enclosed figures, in which
Fig. 1 shows a schematic diagram of a known random access time window,
Fig. 2 shows a schematic diagram of a first example of a random access time window according to the present invention,
Fig. 3 shows a schematic diagram of a second example of a random access time window according to the present invention,
Fig. 4 shows a schematic diagram of a third example of a random access time window according to the present invention,
Fig. 5 shows a schematic diagram of a random access time window succeeding the random access time window shown in Fig. 4,
Fig. 6 shows a schematic diagram of a fourth example of a random access time window according to the present invention,
Fig. 7 shows a diagram of a reservation procedure for reserving reservation based random access slots according to the present invention,
Fig. 8 shows four schematic diagrams of random access time windows according to the present invention for explaining the use of contention based random access slots and reservation based random access slots according to the present invention,
Fig. 9 shows a schematic diagram of a plurality of succeeding second sections of random access time windows according to the present invention for explaining the duration based expiring of reserved random access slots,
Fig. 10 shows a schematic diagram of a plurality of succeeding second sections of random access time windows according to the present invention for explaining the mobile station originated cancellation of reserved random access slots,
Fig. 11 shows a schematic diagram of a plurality of second sections of random access time windows according to the present invention for explaining the network originated cancellation of reserved random access slots,
Fig. 12 shows a schematic diagram of a plurality of succeeding second sections of random access time windows according to the present invention for explaining the decay based expiring of reserved random access slots,
Fig. 13 shows a block diagram of a base station and two mobile stations incorporating the present invention,
Fig. 14 shows a block diagram of a mobile station incorporating the present invention, and
Fig. 15 shows a block diagram of a base station incorporating the present invention.

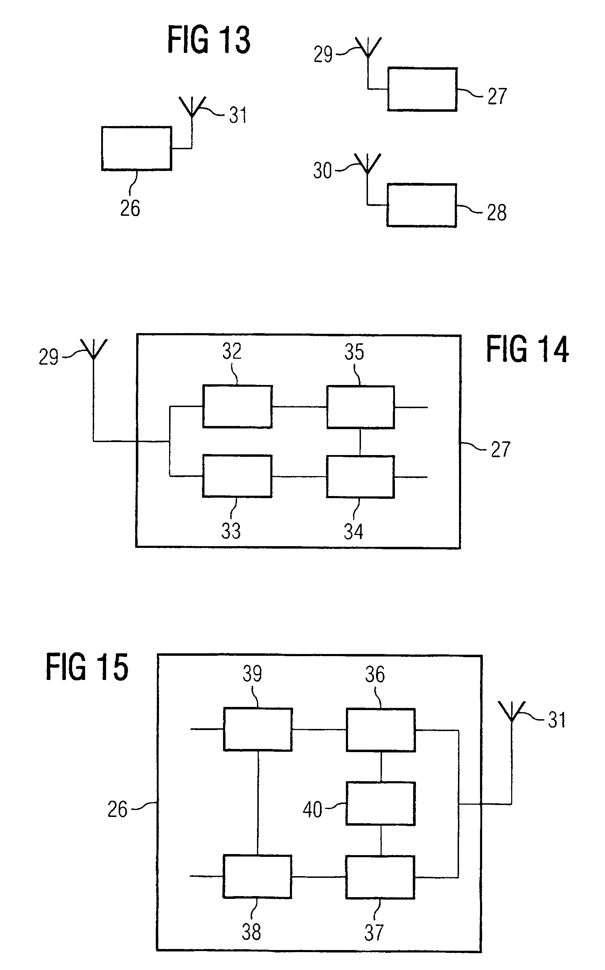

In Fig. 1, a schematic diagram of a known random access time window is shown. In this known random access time window, all available random access slots are contention based. The number of the available contention based random access slots is defined by 8 different time offset values and 16 different preamble codes, so that a total of 128 different random access slots is available per random access time window. In the present application, a random access time window corresponds to the duration of a random access time frame, e. g. 10ms. It is, however, to be noted, that a random access time window according to the present invention can be defined by other parameters as long as a plurality of random access slots for transmitting random access data are available within a certain time period. Further, throughout the following description, the present invention is explained relating to a telecommunication system comprising a base station as for example shown in Fig. 15 and one or more mobile stations as for example shown in Fig. 14.

In Fig. 2, a schematic diagram of a first example of a random access time window 1 according to the present invention is shown. The shown random access time window 1 is partitioned into a first section 2 and a second section 3. The first section 2 contains contention based random access slots and the second section 3 contains reservation based random access slots. The contention based random access slots are used for initial access, singular packet transfer and for reservation of additional dedicated random access slots for a time period within the second section of succeeding random access time windows. The reservation based random access slots in the second section of the random access time window 1 can be allocated to mobile stations, which periodically on a regular basis wish to transfer uplink packet data or make a request for channel reservations to transfer data.

The partition point shown in the random access time window 1 of Fig. 2 allocates a larger number of random access slots to the first section 2 than to the second section 3. Hereby, the partition point only divides the random access time window 1 in view of the preamble codes. In other words, a certain part of the preamble codes available, e. g. 10 of a total of 16 preamble codes, is allocated to the first section 2, whereas the rest of the preamble codes, e. g. the remaining 8 of a total of 16 preamble codes, is allocated to the second section 3. In the example shown in Fig. 2, all time offset values, e. g. 8 different time offset values, remain available for the random access slots in the first section 2 as well as the second section 3.

The actual position of the partition point can be dynamically controlled by a telecommunication network depending upon system requirements, but with respect to current random access slot reservation commitments. In case that a large number of mobile stations attempts to access the network, the number of contention based random access slots in the first section 2 is increased by moving the partition point to reduce the number of reservation based random access slots in the second section 3. If the demand for packet based data is high, the partition point may be moved to reduce the number of contention based random access slots in the first section 2 and create more available reservation based random access slots in the second section 3. This possibility is shown as a second example in the schematic diagram of a random access time window in Fig. 3. In the example shown in Fig. 3, the first section 2 contains a smaller number of contention based random access slots than the second section 3 contains reservation based random access slots.

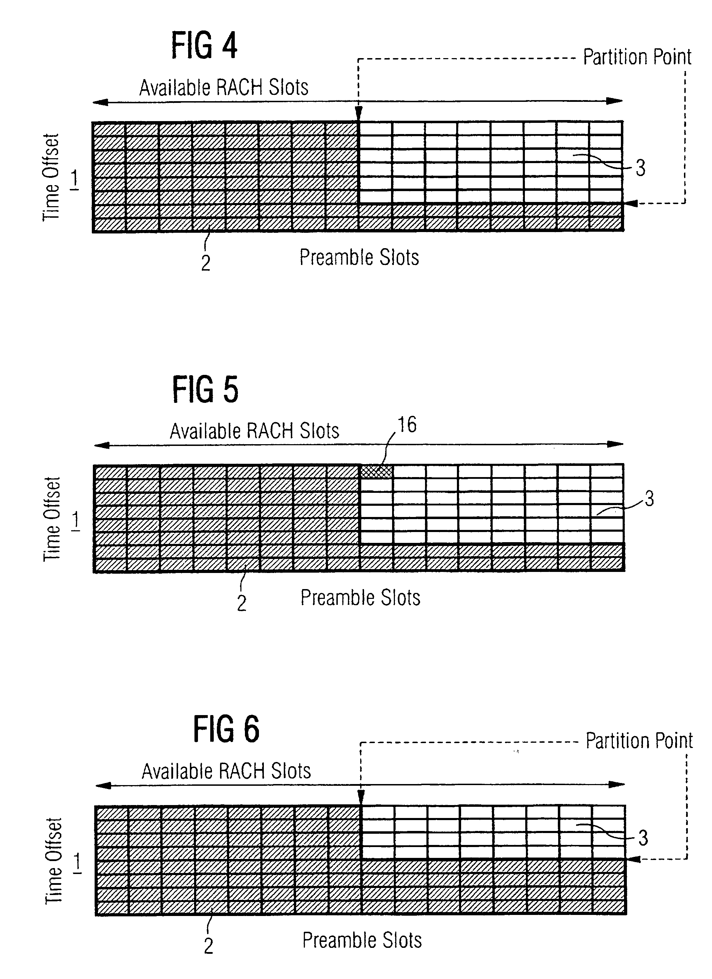

In Fig. 4, a third example of a random access time window according to the present invention is shown. In the example shown in Fig. 4, the partitioning point divides the first section 2 from the second section 3 by partitioning the time offset values as well as the preamble codes, so that the random access time window 1 is partitioned in two dimensions. In the example shown in Fig. 4, only 6 of a total of 8 time offset values and 8 of a total of 16 preamble codes are available for the reservation based random access slots in the second section 3.

In Fig. 5, a random access time window is schematically shown, which is partitioned identically to and succeeds the random access time window shown in Fig. 4. One of the random access slots of the second section 3 of the time window shown in Fig. 5, which is identified by the reference numeral 16, is a reserved random access slot, which has been reserved by one of the contention based random access slots of the first section 2 of the time window shown in Fig. 4.

In Fig. 6, a fourth example of a random access time window 1 according to the present invention is shown, which illustrates another partitioning of the random access time window. The random access time window shown in Fig. 6 is divided in two dimensions, whereby 8 of a total of 16 preamble codes and 4 of a total of 6 time offset values are allocated to the second section 3.

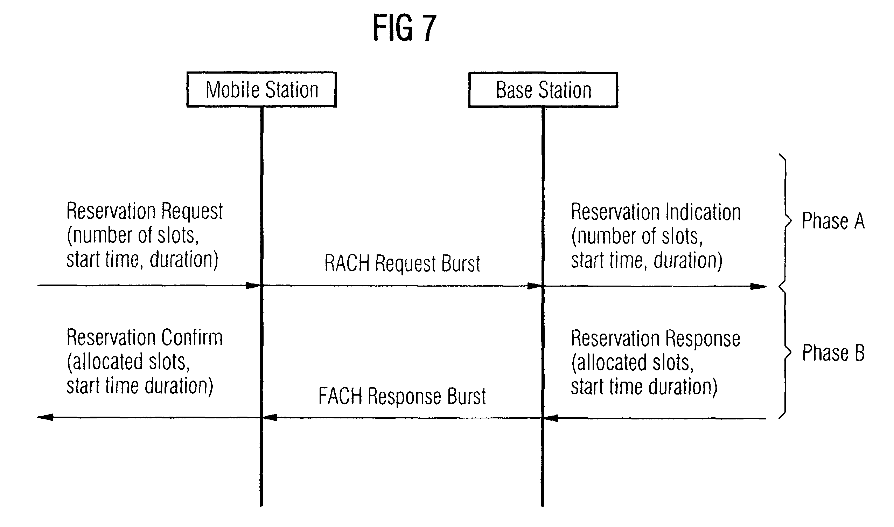

In Fig. 7, the signaling procedure for the reservation of reservation based random access slots is explained. A mobile station 27 as for example shown in Fig. 14 wishes to transmit packet-oriented data and therefore makes a request for a reservation based random access slot using a contention based random access slot. Therefore, the mobile station 27 randomly chooses a time offset value and a preamble code from the available contention based random access slots of section 1 of the current random access time window and transmits the required reservation information to the corresponding base station as for example shown in Fig. 15. The required reservation information can e. g. comprise the number of random access slots to be reserved, the start time of the required random access slots to be reserved and the total duration of the reservation. The base station 26 determines, if it has enough resources in the corresponding second section 3 of the succeeding random access time windows to grant the reservation request from the mobile station 27. In other words, the base station 26 decides, if sufficient reservation based relevant access channels in the succeeding random access time windows are available and sends, if the decision is positive, a corresponding response, e. g. on the forward access channel, back to the mobile station 27. The response burst contains the reservation parameters, e. g. the time the reservation is available and the duration of the reservation. Should the base station 26 wish to allocate less random access slots in the second section 3 of the succeeding random access time windows as requested by the mobile station 27 or not be able to grant the request at all, this can also be indicated within the response burst.

In case that the response burst from the base station 26 grants all the required reservation resources to the mobile station, the mobile station transmits e. g. packet orientated random access bursts using the preamble code and the time offset value provided in the burst response from the base station. For example, random access slot 16 shown in the second section 3 of the random access time window of Fig. 5 is a random access slot, which had been reserved by a corresponding request sent within a random access slot of the first section 2 of the preceding random access time window shown in Fig. 4.

In case that the base station determines or receives information that the number of the contention based random access slots need to be increased, it broadcasts the new partition point to the corresponding mobile stations, so that the succeeding random access time windows are partitioned correspondingly.

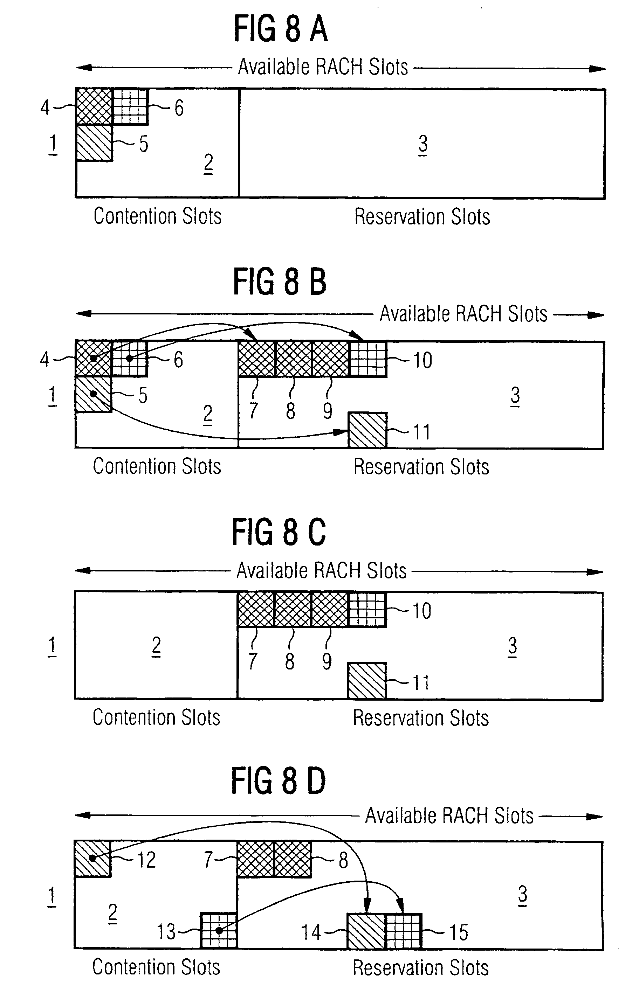

In Fig. 8, four schematic diagrams (a) - (d) are shown to explain how contention based random access slots of the first section 2 of a random access time window are used to reserve reservation based random access slots in the second section 3 of succeeding random access time windows. Although the diagrams of Fig. 8 are shown for a single time domain, it is to be noted, that the reservation principle takes place in the continuous time domain.

The mobile station 27 selects a preamble code and a time offset from the set of available contention based random access signals and constructs a random access burst. The random access burst also contains the required resource reservation, e. g. the required number of random access slots to be reserved, the required duration of the reservation, the desired reservation policy, and the desired release procedure. The random access slot burst may further contain requests for a number of independent reservations. The random access burst is then transmitted from the mobile station over the air interface to a base station 26. The diagram shown in Fig. 8(a) shows three simultaneously transmitted initial random access bursts 4, 5, 6, transmitted in the corresponding random access slots of the first section 2 of the current random access time window. The random access bursts 4, 5, 6 are received at the receiver controlling radio resources, e. g. a base station. Thereby, the available set of contention based random access slots and reservation based random access slots is presented on a broadcast channel by transmitting only the corresponding partition point from the base station to the mobile stations 27, 28. Thus, the partition point can be continuously modified and transmitted with a very low overhead.

The base station allocates, if available, the requested resources from the reservation based random access slots in the second sections 3 of the succeeding random access time windows and marks these in use beginning at the requested time and terminating after the requested duration. This is shown in the diagram of Fig. 8(b). For the ease of explanation, the initial random access burst 4, 5, 6 of the preceding random access time window are also shown. The random access burst 4 of the preceding random access time window reserves three random access slots 7, 8, 9 in the section 2 of the succeeding random access time window. The initial random access burst 5 reserves one random access slot in the second section 3 of the preceding random access time window. The initial random access burst 6 reserves one random access slot 10 in the second section 3 of the succeeding random access time window.

The actual succeeding random access time window 1 succeeding the random access time window 1 shown in Fig. 8(a) is shown in the diagram of Fig. 8(b). In this succeeding random access time window 1, no initial random access bursts are transmitted in the random access slots of the first section 2, but the reserved random access slots 7, 8, 9, 10, and 11 in the second section 3 of the random access time window are available for transmitting data. If the base station determines, that fewer resources as requested are available and the mobile station 27 indicated this as reasonable in the indicated desired reservation policy, a maximum of resources within the available resources is selected. If the desired reservation procedure indicated that an exact match must be made, a negative result is generated and no random access slots are reserved in the succeeding random access time windows. A notification of the requested reservation outcome is transmitted to the mobile stations. This includes the allocated random access slots in the second section 3 of the succeeding random access time windows and the valid duration for their use. On reception of the positive notification of a successful reservation, the mobile stations proceed to make random access bursts on the reserved random access slots. The result might be as shown in Fig. 8(c). For instance, a web browsing service may use the reserved random access slots to request specific web pages by transmitting the HTML address in the random access burst. Alternatively, the reserved random access slots may be used to request additional channels for up- or downlink data transfer. The diagram in Fig. 8(d) shows how random access slots, that have expired, may be re-allocated to new requests. For example, a new initial random access burst 12 transmitted in the first section 3 of a random access time window may reserve a random access slot 14 with the same address as the old reserved random access slot 11 of Figs. 8(b) and 8(c), which has expired. Another new initial random access burst 13 may reserve a new random access slot 15 in the second section 3 of the same succeeding random access time window. Further on, as shown in Fig. 8(d), the random access slots 7 and 8, which had been reserved in an earlier random access time window, stay reserved also in the same random access time window as the reserved random access slots 14 and 15.

It is further possible, that the base station 26 automatically assigns a particular reservation based random access slot in each random access time window for a mobile station 27, which makes a large number of accesses to contention based random access slots. The mobile station is informed on the automatic assignment by transmission of the reserved random access slot by the base station.

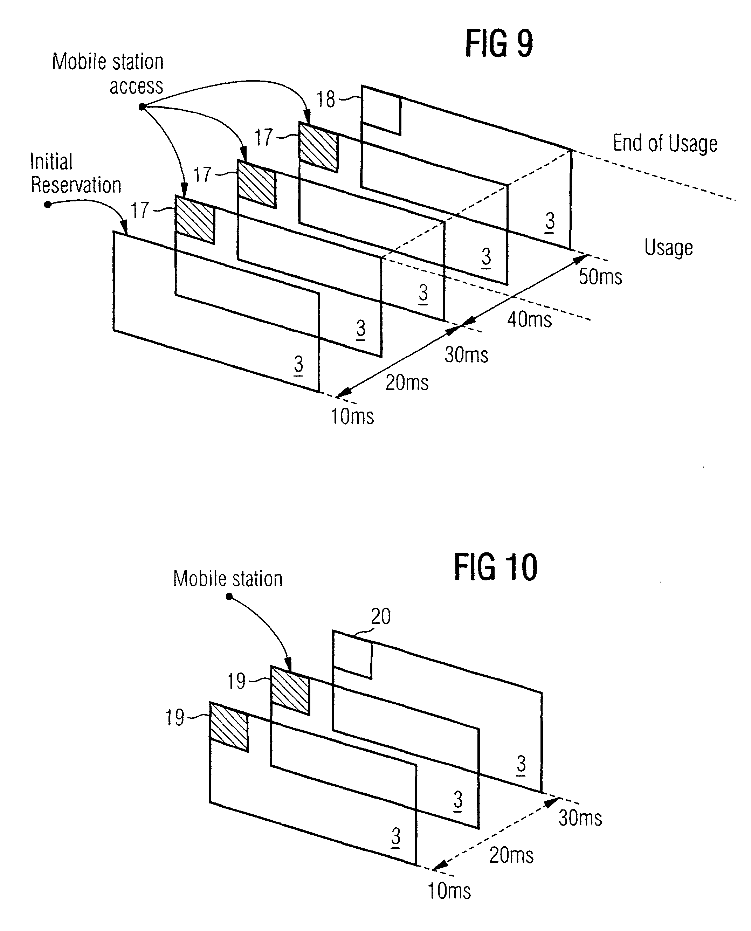

Reserved random access slots must at some point be relinquished. It is important, that the scheme used should serve the needs of the resource allocator, the resource requester, and the characteristics of data being transmitted either through the random access burst or the establishment of dedicated transport channels. Therefore, relating to Fig. 9 - 12, a number of mechanisms are presented, which may be used when requesting and/or terminating reservation of random access slots. In Fig. 9 - 12, only reservation based random access slots of the second sections 3 of sequential random access time windows are shown.

Fig. 9 shows an example for a duration based reservation of random access slots in the second section 3. The perspective view in Fig. 9 thereby shows five sequential second sections 3 provided every 10ms. The initial reservation takes place in the first section 2 (not shown) of the random access time window, of which only the second section 3 is shown at 10ms. The initial reservation reserves a random access slot 17 in the three succeeding random access time windows shown at 20ms, 30ms, and 40ms. Since the required duration for the reservation based random access slots had been set within the original request, the mobile station is allowed to use the reserved random access slots up until the end of the duration. The end of the duration is reached at the 5^{th} random access time window, of which only the second section 3 is shown at 50ms. At this point, the reserved random access slot 17 is expired and a reservation must be repeated for further access using reservation based random access slots.

Fig. 10 shows an example for a mobile station originated cancellation of random access slots. The perspective view in Fig. 10 thereby shows three sequential second sections 3 provided every 10ms. The mobile station might wish to release its use of certain reserved slots immediately. In the example shown in Fig. 10, the succeeding slots 19 had been reserved and used by the mobile station to transmit packet oriented data. Although the corresponding succeeding random access slot 20 in the succeeding random access time window had been reserved initially, the mobile station wishes to cancel this reservation. This case may occur, when a mobile station speculatively asks for a number of future reservations, which subsequently are not required and are released prematurely. It is important, that reservation slots can be removed selectively. The mobile station makes a random access burst using the reservation code, which it wishes to cancel. On reception of the random access burst by the base station, the allocation is removed and the initially reserved random access slot is available to be reallocated.

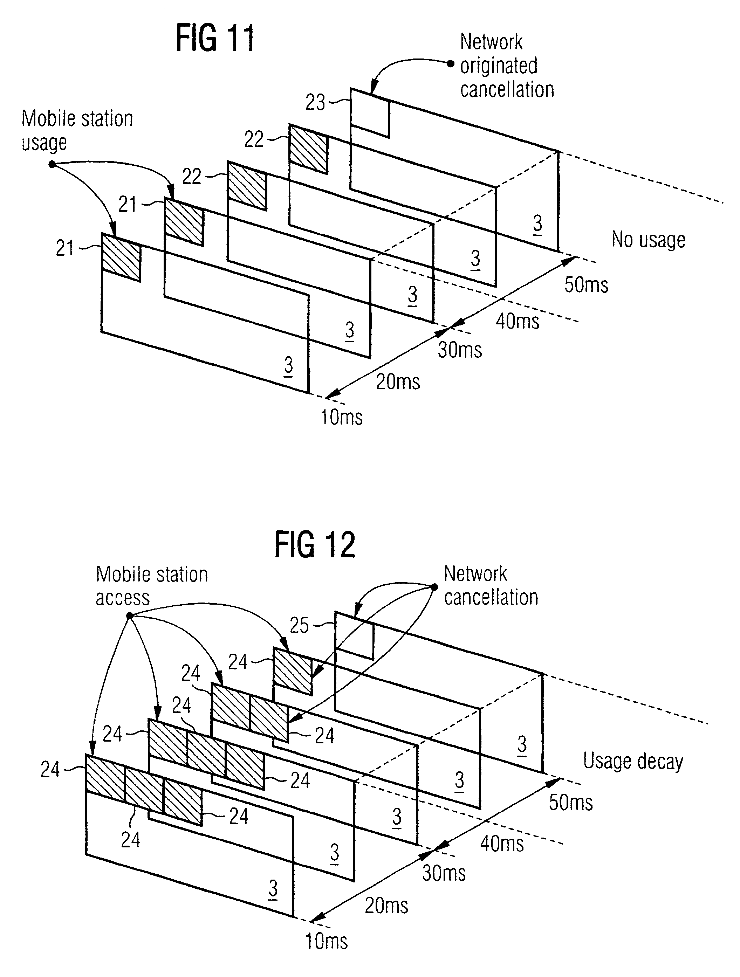

Fig. 11 shows an example for a mobile station originated cancellation of random access slots. The perspective view in Fig. 11 thereby shows five sequential second sections 3 provided every 10ms. A mobile station has reserved succeeding random access slots 21, 22, and 23 of succeeding random access time windows. Of these reserved random access slots, the mobile station uses only the random access slots 21 in the first two succeeding random access time windows to transmit data. The succeeding two random access slots 22 are not used by the mobile station, which is detected by the base station. In other words, if a burst on reserved random access slots has not been received during a predetermined number of time periods, the base station cancels the succeeding reserved random access slots. In the case shown in Fig. 11, the base station cancels the reservation for the succeeding reserved random access slots 23 in the fifth random access time window, since the two preceding random access slots 22 have not been used by the mobile station. It may be necessary for the base station to confirm the cancellation by transmission of a cancellation indication to the mobile station to avoid later collisions within the reserved random access slots. This may occur, when a mobile station later attempts to use a reserved random access slot, which has not been used due to busy traffic or area condition.

Fig. 12 shows an example for a decay based cancellation of random access slots. The perspective view in Fig. 12 thereby shows five sequential second sections 3 provided every 10ms. The case shown in Fig. 12 is a subcase to the net base station originated cancellation shown in Fig. 11. The reserved random access slots 24 are reduced over a number of succeeding random access time windows based upon a schedule known to both the mobile station and the base station. In the case shown in Fig. 12, the mobile station reserves three random access time slots 24 in the first two succeeding random access time windows. In the third random access time window, the mobile station only reserves two random access time slots 24 and in the fourth random access time window, the mobile station only reserves one random access time slot 24. Consequently, in the fifth succeeding random access time window, the corresponding random access time slot 25 is not reserved any more and available to other mobile stations. This application may be particularly applicable to bursty data which may require a larger number of initial random access slots to improve the initial access, but slower over a time period. This may occur for terminal emulation software. User commands need a fast response, however, if these commands initiate a large data transfer, the speed of access will not be required.

Fig. 13 shows a block diagram of a base station 26 and two mobile stations 27, 28, incorporating the present invention. The base station 26 comprises an antenna 31, the first mobile station 27 comprises an antenna 29 and the second mobile station 28 comprises an antenna 30. The base station 26 and the two mobile stations 27, 28 are arranged and adapted to transmit and receive data in a code division multiple access telecommunication system according to the present invention as described above relating to Figs. 2 - 12. The base station 26 and the two mobile stations 27, 28 thereby comprise the known elements, which are required for a proper operation. Thus, the base station 26 and the mobile stations 27, 28 according to the present invention comprise coders, encoders, interleavers, deinterleavers, modulators, demodulators, HF-receiving and transmission means and so on.

Further on, as shown in the block diagrams of Fig. 14 and 15, the base station 26 and the mobile stations comprise the corresponding means for incorporating the present invention. Thus, the mobile station 27, which is shown in Fig. 14, comprises an antenna 29 coupled to a receiving means 32 and a transmitting means 33. The receiving means 32 is coupled with a means 35 for determining the partition point transmitted with partitioning information from a base station. The receiving means 32 receives the partitioning information and the means 35 for determining the partition point extracts the partition point from the received partitioning information. The means 34 for choosing a random access slot within a first section 2 of a random access time window is coupled to said means 35 for determining the partition point and also to a transmitting means 33 coupled to the antenna 29. The mobile station therefore knows from the received partitioning information, in which way the random access time windows are divided into the first section 2 and the second section 3, and the means 34 for choosing the random access slot correspondingly chooses a random access slot from the first section 2 to transmit random access data to the corresponding mobile station. The receiving means 32, the transmitting means 33, the means 34 for choosing random access slots and the means 35 for determining the partition point are further connected to the known means required for normal operation of a mobile station.

In Fig. 15, a block diagram of the base station 26 incorporating the present invention is shown. The base station 26 comprises a receiving means 36 and a transmitting means 37, which are both coupled to the antenna 31. A means 38 for partitioning the random access time windows in a first and a second section 2, 3 is coupled to the transmitting means 37. The means 38 for partitioning the random access time windows is thereby provided with information on the corresponding system requirements, on the basis of which it determines the partition point. The partitioning information is then transmitted over the transmitting means 37 and the antenna 31 to the corresponding mobile station, for example the mobile station 27. The means 38 for partitioning the random access time windows 1 sets the number of random access slots in the first and the second section 2, 3 variably depending on the system requirements and the transmitting means 37 transmits the partitioning information periodically to the connected mobile stations. The receiving means 36 receives random access data in one of the random access slots from the first sections 2 of random access time windows transmitted by a mobile station. The receiving means 36 is coupled to a means 39 for reserving random access slots in the second section 3 of the random access time windows in case that a random access burst transmitted in a contention based random access slot contains reservation information. The means 39 for reserving reservation based random access slots thereby extracts the reservation information from the received random access burst. Further, the means 39 for reserving reservation based random access slots generates a confirmation signal which is transmitted over the transmitting means 37 to the respective mobile station to confirm the reservation or to inform the mobile station, that no or fewer random access slots as required are reserved. The means 39 for reserving random access slots is thereby connected to the means 38 for defining the partition point, so that each time a new partition point is defined, information on the currently reserved random access slots can be respected. The base station 26 further comprises a means 40 for determining a non-usage of reserved random access slots in case that the base station operates according to the example shown in Fig. 11. Upon the determination of a non-usage of a predetermined number of reserved random access slots, the means 40 generates a corresponding cancellation signal, which is transmitted over the transmission means 37 to the mobile station, as described relating to Fig. 11.

The advantage of the method and the devices according to the present invention is, that a big part of the contention based access is removed. Further, an efficient use of the random access channel and therefore the random access time windows is ensured, since, when contention based use is not in demand, more capacity can be given to reserved resources. Thereby, the partitioning can be changed dynamically by the network. Further, the random access bursts can carry additional information embodied as either user or control data. This can be used to describe the type of channel required or to make a future reservation. Another advantage of the present invention is that changes to the layer 1 standards are not required. Further, the percentage partitioning of the random access time window can be employed optionally be a network provider. If he wishes not to use the capability, the number of reservation based random access slots can be set to zero.

Although in the above description the partitioning of a random access time window into two sections has been described, partitioning of a random access time window into three or more sections is possible. Further, as an additional feature to the partitioning of the random access time window, the random access slots within the different sections of the random access time window can be divided into groups having different priority classes. Since the random access data to be transmitted in the random access slots can have different transmission priorities, it can be ensured, that some types of random access data will have a better possibility of gaining access to the network due to the higher probability that a particular message will be successful in reaching the base station. The network can dynamically change the size of the groups depending on system requirements and broadcasts the corresponding information to the mobile station.

## Claims

1. Method for transmitting and receiving data in a code division multiple access telecommunication system, comprising the steps of
providing a random access time window (1) comprising a plurality of random access slots for transmitting random access data from at least one first communication device (27, 28) to a second communication device (26),
partitioning the random access time window (1) in a first and a second section (2, 3), whereby the first section contains contention based random access slots and the second section (3) contains reservation based random access slots,
whereby a first communication device (27, 28) for transmitting random access data to said second communication device (26), randomly chooses one of said random access slots from said first section (2) of said random access time window (1), and
whereby said random access data transmitted in a random access slot of said first section (2) comprise reservation data for reserving at least one random access slot of said second section (3) in at least one succeeding random access time window (1).

2. Method for transmitting and receiving data according to claim 1,
**characterized in,**
**that** in said partitioning step the number of random access slots in the first and second section (2, 3), respectively, is set variably depending on system requirements.

3. Method for transmitting and receiving data according to claim 1 or 2,
**characterized in,**
**that** each random access slot in said random access time window is defined by a time offset value and a preamble code.

4. Method for transmitting and receiving data according to claim 1, 2 or 3,
**characterized in,**
**that** said second communication device periodically transmits partitioning information defining the partitioning of said random access time window to at least one first communication device (27, 28).

5. Method for transmitting and receiving data according to one of the claims 1 to 4,
**characterized in,**
**that** said reservation data comprise information on the time duration required for the total number of reserved random access slots to indicate the end of the reservation.

6. Method for transmitting and receiving data according to claim 5,
**characterized in,**
**that** said reservation data comprise information on a number of random access slots to be reserved in the first succeeding random access time window (1) and information on a continuous reduction of said number in the following random access time windows.

7. Method for transmitting and receiving data according to one of the claims 1 to 6,
**characterized in,**
**that** said first communication device (27, 28), for indicating the end of the reservation of the required random access slots, transmits reservation termination data in said first or second section (2) of a random access time window (1).

8. Method for transmitting and receiving data according to one of the claims 1 to 6,
**characterized in,**
**that** said second communication device (26), upon determination of a non-usage of reserved random access slots, terminates the reservation.

9. Method for transmitting and receiving data according to claim 8,
**characterized in,**
**that** said second communication device (26) transmits information on the termination of the reservation to the corresponding first communication device.

10. Device (27, 28) for transmitting and receiving data in a code division multiple access telecommunication system, in which a random access time window (1) comprising a plurality of random access slots for transmitting random access data is provided, the random access time window being partitioned in a first and a second section (2, 3), whereby the first section (2) contains contention based random access slots and the second section (3) contains reservation based random access slots, with means (34) for randomly choosing a random access slot from said first section, and means (33) for transmitting random access data in said chosen random access slot, whereby said random access data transmitted in a random access slot of said first section (2) comprise reservation data for reserving at least one random access slot of said second section (3) in at least one succeeding random access time window (1).

11. Device for transmitting and receiving data according to claim 10,
**characterized in,**
**that** each random access slot in said random access time window is defined by a time offset value and a preamble code.

12. Device for transmitting and receiving data according to claim 10 or 11,
**characterized by**
means (32) for receiving periodically transmitted partitioning information defining the partitioning of said random access time window (1).

13. Device for transmitting and receiving data according to one of the claims 10 to 12,
**characterized in,**
**that** said reservation data comprise information on the time duration required for the total number of reserved random access slots to indicate the end of the reservation.

14. Device for transmitting and receiving data according to claim 13,
**characterized in,**
**that** said reservation data comprise information on a number of random access slots to be reserved in the first succeeding random access time window and information on a continuous reduction of said number in the following random access time windows.

15. Device for transmitting and receiving data according to one of the claims 10 to 14,
**characterized in,**
**that** said means (33) for transmitting random access data, for indicating the end of the reservation of the required random access slots, transmits reservation termination data in said first or second section (2) of a random access time window (1).

16. Device (26) for transmitting and receiving data in a code division multiple access telecommunication system, in which a random access time window (1) comprising a plurality of random access slots for transmitting random access data is provided, with means (38) for partitioning the random access time window in a first and a second section (2, 3), whereby the first section (2) contains contention based random access slots and the second section (3) contains reservation based random access slots,
means (37) for transmitting partitioning information defining the partitioning of said random access time window (1),
whereby said random access data received in a random access slot of said first section (2) comprise reservation data for reserving at least one random access slot of said second section (3) in at least one succeeding random access time window, said device (26) further comprising means (39) for reserving at least one random access slot of said second section (3) in at least one succeeding random access time window.

17. Device for transmitting and receiving data according to claim 19,
**characterized in,**
**that** said means (38) for partitioning the random access time window (1) sets the number of random access slots in said first and second section, respectively, variably depending on system requirements, and
said means (37) for transmitting partitioning information periodically transmits said partitioning information.

18. Device for transmitting and receiving data according to claim 19 or 20,
**characterized by**
means (36) for receiving random access data in one of said random access slots from said first section (2) of said random access time window (1).

19. Device for transmitting and receiving data according to claim 16, 17 or 18,
**characterized in,**
**that** said reservation data comprise information on the time duration required for the total number of reserved random access slots to indicate the end of the reservation.

20. Device for transmitting and receiving data according to one of the claims 16 to 19,
**characterized in,**
**that** said reservation data comprise information on a number of random access slots to be reserved in the first succeeding random access time window and information on a continuous reduction of said number in the following random access time windows.

21. Device for transmitting and receiving data according to one of the claims 16 to 20,
**characterized by**
means (40) for determining of a non-usage of reserved random access slots, whereby the reservation is terminated upon a positive result of said determination.

22. Device for transmitting and receiving data according to claim 21,
**characterized by**
means (37) for transmitting information on the termination of the reservation upon a positive result of said determination.

## Patentansprüche

1. Verfahren zum Übertragen und Empfangen von Daten in einem Codemultiplex-Vielfachzugriff-Telekommunikationssystem, welches folgende Schritte aufweist:
Bereitstellen eines Direktzugriffs-Zeitfensters (1), welches mehrere Direktzugriffsschlitze zur Übertragung von Direktzugriffsdaten von zumindest einer ersten Kommunikationseinrichtung (27, 28) zu einer zweiten Kommunikationseinrichtung (26) aufweist,
Aufteilen des Direktzugriffsfensters (1) in einen ersten und einen zweiten Abschnitt (2, 3), wodurch der erste Abschnitt auf Konkurrenz basierende Direktzugriffsschlitze und der zweite Abschnitt (3) auf Reservierung basierende Direktzugriffsschlitze enthält,
wodurch eine erste Kommunikationseinrichtung (27, 28) zum Übertragen von Direktzugriffsdaten zur zweiten Kommunikationseinrichtung (26) einen der Direktzugriffsschlitze vom ersten Abschnitt (2) des Direktzugriffs-Zeitfensters (1) direkt wählt, und wodurch die Direktzugriffsdaten, welche im Direktzugriffsschlitz des ersten Abschnitts (2) übertragen werden, Reservierungsdaten aufweisen, um zumindest einen Direktzugriffsschlitz des zweiten Abschnitts (3) in einem nachfolgenden Direktzugriffs-Zeitfenster (1) zu reservieren.

2. Verfahren zum Übertragen und Empfangen von Daten nach Anspruch 1,
**dadurch gekennzeichnet, dass** im Aufteilungsschritt die Anzahl von Direktzugriffsschlitzen im ersten bzw. zweiten Abschnitt (2, 3) in Abhängigkeit von Systemerfordernissen variabel einstellt wird.

3. Verfahren zum Übertragen und Empfangen von Daten nach Anspruch 1 oder 2,
**dadurch gekennzeichnet, dass** jeder Direktzugriffsschlitz im Direktzugriffs-Zeitfenster durch einen Zeitversatzwert und einen Präambelcode definiert ist.

4. Verfahren zum Übertragen und Empfangen von Daten nach Anspruch 1, 2 oder 3,
**dadurch gekennzeichnet, dass** die zweite Kommunikationseinrichtung Aufteilungsinformation, die das Aufteilen des Direktzugriffs-Zeitfensters definiert, zu zumindest einer ersten Kommunikationseinrichtung (27, 28) periodisch überträgt.

5. Verfahren zum Übertragen und Empfangen von Daten nach einem der Ansprüche 1 bis 4,
**dadurch gekennzeichnet, dass** die Reservierungsdaten Information über die Zeitdauer aufweisen, welche für die Gesamtzahl reservierter Direktzugriffsschlitze erforderlich ist, um das Ende der Reservierung anzuzeigen.

6. Verfahren zum Übertragen und Empfangen von Daten nach Anspruch 5,
**dadurch gekennzeichnet, dass** die Reservierungsdaten Information über die Anzahl von Direktzugriffsschlitzen, die im ersten nachfolgenden Direktzugriffs-Zeitfenster (1) zu reservieren sind, und Information über eine kontinuierliche Reduzierung der Anzahl in den folgenden Direktzugriffs-Zeitfernstern aufweisen.

7. Verfahren zum Übertragen und Empfangen von Daten nach einem der Ansprüche 1 bis 6,
**dadurch gekennzeichnet, dass** die erste Kommunikationseinrichtung (27, 28) zum Anzeigen des Endes der Reservierung der erforderlichen Direktzugriffsschlitze Reservierungsbeendigungsdaten im ersten oder im zweiten Abschnitt (2) des Direktzugriffs-Zeitfenster (1) überträgt.

8. Verfahren zum Übertragen und Empfangen von Daten nach einem der Ansprüche 1 bis 6,
**dadurch gekennzeichnet, dass** die zweite Kommunikationseinrichtung (26) bei Ermittlung einer Nichtverwendung von reservierten Direktzugriffsschlitzen die Reservierung beendet.

9. Verfahren zum Übertragen und Empfangen von Daten nach Anspruch 8,
**dadurch gekennzeichnet, dass** die zweite Kommunikationseinrichtung (26) Information über die Beendigung der Reservierung zur entsprechenden ersten Kommunikationseinrichtung überträgt.

10. Einrichtung (27, 28) zum Übertragen und Empfangen von Daten in einem Codemultiplex-Vielfachzugriff-Telekommunikationssystem, bei dem ein Direktzugriffs-Zeitfenster (1), welches mehrere Direktzugriffsschlitze aufweist, um Direktzugriffsdaten zu übertragen, vorgesehen ist, wobei das Direktzugriffs-Zeitfenster in einen ersten und einen zweiten Abschnitt (2, 3) aufgeteilt ist, wodurch der erste Abschnitt (2) auf Konkurrenz basierende Direktzugriffsschlitze enthält und der zweite Abschnitt (3) auf Reservierung basierende Direktzugriffsschlitze enthält, mit einer Einrichtung (34) zum direkten Wählen eines Direktzugriffsschlitzes vom ersten Abschnitt, und einer Einrichtung (33) zum Übertragen von Direktzugriffsdaten in dem gewählten Direktzugriffsschlitz, wodurch die Direktzugriffsdaten, welche in einem Direktzugriffsschlitz des ersten Abschnitts (2) übertragen werden, Reservierungsdaten aufweisen, um zumindest einen Direktzugriffsschlitz des zweiten Abschnitts (3) in zumindest einem nachfolgenden Direktzugriffs-Zeitfenster (1) zu reservieren.

11. Verfahren zum Übertragen und Empfangen von Daten nach Anspruch 10,
**dadurch gekennzeichnet, dass** jeder Direktzugriffsschlitz im Direktzugriffs-Zeitfenster durch einen Zeitversatzwert und einen Präambelcode definiert ist.

12. Einrichtung zum Übertragen und Empfangen von Daten nach Anspruch 10 oder 11,
**gekennzeichnet durch** eine Einrichtung (32) zum Empfangen periodisch übertragener Aufteilungsinformation, die die Aufteilung des Direktzugriffs-Zeitfensters (1) definiert.

13. Einrichtung zum Übertragen und Empfangen von Daten nach einem der Ansprüche 10 bis 12,
**dadurch gekennzeichnet, dass** die Reservierungsdaten Information über die Zeitdauer aufweisen, welche für die Gesamtzahl von reservierten Direktzugriffsschlitzen erforderlich ist, um das Ende der Reservierung anzuzeigen.

14. Einrichtung zum Übertragen und Empfangen von Daten nach Anspruch 13,
**dadurch gekennzeichnet, dass** die Reservierungsdaten Information über eine Anzahl von Direktzugriffsschlitzen, die im ersten nachfolgenden Direktzugriffs-Zeitfenster zu reservieren sind, und die Information über eine kontinuierliche Reduzierung der Anzahl in den folgenden Direktzugriffs-Zeitfenstem aufweisen.

15. Einrichtung zum Übertragen und Empfangen von Daten nach einem der Ansprüche 10 bis 14,
**dadurch gekennzeichnet, dass** die Einrichtung (33) zum Übertragen von Direktzugriffsdaten zum Anzeigen des Endes der Reservierung der erforderlichen Direktzugriffsschlitze Reservierungsbeendigungsdaten im ersten oder zweiten Abschnitt (2) eines Direktzugriffs-Zeitfensters (1) überträgt.

16. Einrichtung (26) zum Übertragen und Empfangen von Daten in einem Codemultiplex-Vielfachzugriff-Telekommunikationssystem, bei dem ein Direktzugriffs-Zeitfenster (1), welches mehrere Direktzugriffsschlitze zum Übertragen von Direktzugriffsdaten aufweist, vorgesehen ist, mit einer Einrichtung (38) zum Aufteilen des Direktzugriffsfensters in einen ersten und einen zweiten Abschnitt (2, 3), wodurch der erste Abschnitt (2) auf Konkurrenz basierende Direktzugriffsschlitze enthält und der zweite Abschnitt (3) auf Reservierung basierende Direktzugriffsschlitze enthält, einer Einrichtung (37) zum Übertragen von Aufteilungsinformation, die die Aufteilung des Direktzugriffs-Zeitfenster (1) definiert,
wodurch die Direktzugriffsdaten, welche in einem Direktzugriffsschlitz des ersten Abschnitts (2) empfangen werden, Reservierungsdaten aufweisen, um zumindest einen Direktzugriffsschlitz des zweiten Abschnitts (3) in zumindest einem nachfolgenden Direktzugriffs-Zeitfenster zu reservieren, wobei die Einrichtung (26) außerdem eine Einrichtung (39) aufweist, um zumindest einen Direktzugriffsschlitz des zweiten Abschnitts (3) in zumindest einem nachfolgenden Direktzugriffs-Zeitfenster zu reservieren.

17. Einrichtung zum Übertragen und Empfangen von Daten nach Anspruch 19,
**dadurch gekennzeichnet, dass** die Einrichtung (38) zum Aufteilen des Direktzugriffs-Zeitfensters (1) die Anzahl von Direktzugriffsschlitzen im ersten bzw. zweiten Abschnitt in Abhängigkeit von Systemerfordernissen variabel einstellt, und
die Einrichtung (37) zum Übertragen von Aufteilungsinformation die Aufteilungsinformation periodisch überträgt.

18. Einrichtung zum Übertragen und Empfangen von Daten nach Anspruch 19 oder 20,
**gekennzeichnet durch** eine Einrichtung (36) zum Empfangen von Direktzugriffsdaten in einem der Direktzugriffsschlitze vom ersten Abschnitt (2) des Direktzugriffs-Zeitfensters (1).

19. Einrichtung zum Übertragen und Empfangen von Daten nach Anspruch 16, 17 oder 18,
**dadurch gekennzeichnet, dass** die Reservierungsdaten Information über die Zeitdauer aufweisen, die für die Gesamtzahl reservierter Direktzugriffsschlitze erforderlich ist, um das Ende der Reservierung anzuzeigen.

20. Einrichtung zum Übertragen und Empfangen von Daten nach einem der Ansprüche 16 bis 19,
**dadurch gekennzeichnet, dass** die Reservierungsdaten Information über die Anzahl von Direktzugriffsschlitzen, die im ersten nachfolgenden Direktzugriffs-Zeitfenster zu reservieren sind, und Information über eine kontinuierliche Reduzierung dieser Anzahl in den folgenden Direktzugriffs-Zeitfenstern aufweisen.

21. Einrichtung zum Übertragen und Empfangen von Daten nach einem der Ansprüche 16 bis 20,
**gekennzeichnet durch** eine Einrichtung (40) zum Bestimmen einer Nichtverwendung von reservierten Direktzugriffsschlitzen, wodurch die Reservierung bei einem positiven Ergebnis dieser Bestimmung beendet wird.

22. Einrichtung zum Übertragen und Empfangen von Daten nach Anspruch 21,
**gekennzeichnet durch** eine Einrichtung (37) zum Übertragen von Information über die Beendigung der Reservierung bei einem positiven Ergebnis dieser Bestimmung.

## Revendications

1. Procédé pour transmettre et recevoir des données dans un système de télécommunications à accès multiple à répartition par code, comprenant les étapes consistant à
prévoir une fenêtre temporelle à accès sélectif (1) comprenant une pluralité d'intervalles de temps à accès sélectif pour transmettre des données à accès sélectif entre au moins un premier dispositif de communication (27, 28) et un second dispositif de communication (26),
partitionner la fenêtre temporelle à accès sélectif (1) en une première et une seconde section (2, 3), moyennant quoi la première section contient des intervalles de temps à accès sélectif basé sur l'encombrement et la seconde section (3) contient des intervalles de temps à accès sélectif basé sur la réservation,
moyennant quoi un premier dispositif de communication (27, 28) destiné à transmettre des données à accès sélectif audit second dispositif de communication (26) choisit aléatoirement l'un desdits intervalles de temps à accès sélectif de ladite première section (2) de ladite fenêtre temporelle à accès sélectif (1), et
moyennant quoi lesdites données à accès sélectif transmises dans un intervalle de temps à accès sélectif de ladite première section (2) comprennent des données de réservation pour réserver au moins un intervalle de temps à accès sélectif de ladite seconde section (3) dans au moins une fenêtre temporelle à accès sélectif valable (1).

2. Procédé pour transmettre et recevoir des données selon la revendication 1,
**caractérisé en ce que**,
lors de ladite étape de partitionnement, le nombre d'intervalles de temps à accès sélectif dans la première et la seconde sections (2, 3), respectivement, est défini de manière variable en fonction des exigences du système.

3. Procédé pour transmettre et recevoir des données selon la revendication 1 ou 2,
**caractérisé en ce que**,
chaque intervalle de temps à accès sélectif de ladite fenêtre temporelle à accès sélectif est défini par une valeur de décalage temporel et un code de préambule.

4. Procédé pour transmettre et recevoir des données selon la revendication 1, 2 ou 3,
**caractérisé en ce que**,
ledit second dispositif de communication transmet périodiquement des informations de partitionnement définissant le partitionnement de ladite fenêtre temporelle à accès sélectif au moins audit premier dispositif de communication (27, 28).

5. Procédé pour transmettre et recevoir des données selon l'une des revendication 1 à 4,
**caractérisé en ce que**,
lesdites données de réservation comprennent des informations relatives à la durée nécessaire pour que le nombre total d'intervalles de temps à accès sélectif sélectionné indique la fin de la réservation.

6. Procédé pour transmettre et recevoir des données selon la revendication 5,
**caractérisé en ce que**,
lesdites données de réservation comprennent des informations relatives à un nombre d'intervalles de temps à accès sélectif devant être sélectionné dans la première fenêtre temporelle à accès sélectif valable (1), et des informations relatives à une réduction continue dudit nombre dans les fenêtres temporelles à accès sélectif suivantes.

7. Procédé pour transmettre et recevoir des données selon l'une des revendications 1 à 6,
**caractérisé en ce que**,
ledit premier dispositif de communication (27, 28), destiné à indiquer la fin de la réservation des intervalles de temps à accès sélectif nécessaires, transmet des données relatives à la fin de la réservation dans ladite première ou ladite seconde section (2) d'une fenêtre temporelle à accès sélectif (1).

8. Procédé pour transmettre et recevoir des données selon l'une des revendications 1 à 6,
**caractérisé en ce que**,
ledit second dispositif de communication (26), lors de la détermination d'une non utilisation des intervalles de temps à accès sélectif réservés, met fin à la réservation.

9. Procédé pour transmettre et recevoir des données selon la revendication 8,
**caractérisé en ce que**,
ledit second dispositif de communication (26) transmet des informations relatives à la fin de la réservation au premier dispositif de communication correspondant.

10. Dispositif (27, 28) pour transmettre et recevoir des données dans un système de télécommunications à accès multiple à répartition par code, dans lequel est prévue une fenêtre temporelle à accès sélectif (1) comprenant une pluralité d'intervalles de temps à accès sélectif destinés à transmettre des données, la fenêtre temporelle à accès sélectif étant partitionnée en une première et une seconde sections (2, 3), moyennant quoi la première section (2) contient des intervalles de temps à accès sélectif basé sur l'encombrement et la seconde section (3) contient des intervalles de temps à accès sélectif basé sur la réservation, avec un moyen (34) destiné à choisir aléatoirement un intervalle de temps à accès sélectif de ladite première section, et un moyen (33) destiné à transmettre des données à accès sélectif dans ledit intervalle de temps à accès sélectif choisi, moyennant quoi lesdites données à accès sélectif transmises dans un intervalle de temps à accès sélectif de ladite première section (2) comprennent des données de réservation destinées à réserver au moins un intervalle de temps à accès sélectif de ladite seconde section (3) dans au moins une fenêtre temporelle à accès sélectif valable (1).

11. Dispositif pour transmettre et recevoir des données selon la revendication 10,
**caractérisé en ce que**,
chaque intervalle de temps à accès sélectif au sein de ladite fenêtre temporelle à accès sélectif est défini par une valeur de décalage temporel et un code de préambule.

12. Dispositif pour transmettre et recevoir des données selon la revendication 10 ou 11,
**caractérisé par**
un moyen (32) pour recevoir périodiquement les informations de partitionnement transmises définissant le partitionnement de ladite fenêtre temporelle à accès sélectif (1).

13. Dispositif pour transmettre et recevoir des données selon l'une des revendications 10 à 12,
**caractérisé en ce que**,
lesdites données de réservation comprennent des informations relatives à la durée nécessaire pour que le nombre total d'intervalles de temps à accès sélectif réservé indique la fin de la réservation.

14. Dispositif pour transmettre et recevoir des données selon la revendication 13,
**caractérisé en ce que**,
lesdites données de réservation comprennent des informations relatives à un nombre d'intervalles de temps à accès sélectif devant être réservé dans la première fenêtre temporelle à accès sélectif valable, et des informations relatives à une réduction continue dudit nombre dans les fenêtres temporelles à accès sélectif suivantes.

15. Dispositif pour transmettre et recevoir des données selon l'une des revendications 10 à 14,
**caractérisé en ce que**,
ledit moyen (33) destiné à transmettre des données à accès sélectif, afin d'indiquer la fin de la réservation des intervalles de temps à accès sélectif nécessaires, transmet des données relatives à la fin de la réservation dans ladite première ou ladite seconde section (2) d'une fenêtre temporelle à accès sélectif (1).

16. Dispositif (26) pour transmettre et recevoir des données dans un système de télécommunications à accès multiple à répartition par code, dans lequel est prévue une fenêtre temporelle à accès sélectif (1) comprenant. une pluralité d'intervalles de temps à accès sélectif destinés à transmettre des données, avec un moyen (38) destiné à partitionner la fenêtre temporelle à accès sélectif en une première et une seconde sections (2, 3), moyennant quoi la première section (2) contient des intervalles de temps à accès sélectif basé sur l'encombrement, et la seconde section (3) contient des intervalles de temps à accès sélectif basé sur la réservation, un moyen (37) destiné à transmettre des informations de partitionnement définissant le partitionnement de ladite fenêtre temporelle à accès sélectif (1),
moyennant quoi lesdites données à accès sélectif reçues dans un intervalle de temps à accès sélectif de ladite première section (2) comprennent des données de réservation destinées à réserver au moins un intervalle de temps à accès sélectif de ladite seconde section (3) dans au moins une fenêtre temporelle à accès sélectif valable, ledit dispositif (26) comprenant en outre un moyen (39) pour réserver au moins un intervalle de temps à accès sélectif de ladite seconde section (3) dans au moins une fenêtre temporelle à accès sélectif valable.

17. Dispositif pour transmettre et recevoir des données selon la revendication 19,
**caractérisé en ce que**,
ledit moyen (38) destiné à partitionner la fenêtre temporelle à accès sélectif (1) définit le nombre d'intervalles de temps à accès sélectif dans lesdites première et seconde sections, respectivement, de manière variable en fonction des exigences du système, et
ledit moyen (37) destiné à transmettre les informations de partitionnement transmet périodiquement lesdites informations de partitionnement.

18. Dispositif pour transmettre et recevoir des données selon la revendication 19 ou 20,
**caractérisé par**
un moyen (36) destiné à recevoir des données à accès sélectif dans l'un desdits intervalles de temps à accès sélectif de ladite première section (2) de ladite fenêtre temporelle à accès sélectif (1).

19. Dispositif pour transmettre et recevoir des données selon la revendication 16, 17 ou 18,
**caractérisé en ce que**,
lesdites données de réservation comprennent des informations relatives à la durée nécessaire pour que le nombre total d'intervalles de temps à accès sélectif réservé indique la fin de la réservation.

20. Dispositif pour transmettre et recevoir des données selon l'une des revendications 16 à 19,
**caractérisé en ce que**,
lesdites données de réservation comprennent des informations relatives à un nombre d'intervalles de temps à accès sélectif devant être réservé dans la première fenêtre temporelle à accès sélectif valable, et des informations relatives à une réduction continue dudit nombre dans les fenêtres temporelles à accès sélectif suivantes.

21. Dispositif pour transmettre et recevoir des données selon l'une des revendications 16 à 20,
**caractérisé par**
un moyen (40) destiné à déterminer une non utilisation des intervalles de temps à accès sélectif réservés, moyennant quoi la réservation est annulée lors d'un résultat positif de ladite détermination.

22. Dispositif pour transmettre et recevoir des données selon la revendication 21,
**caractérisé par**
un moyen (37) destiné à transmettre des informations relatives à la fin de la réservation lors d'un résultat positif de ladite détermination.
